# NEUE EUROPÄISCHE PATENTSCHRIFT

(11) **EP 1 788 347 B2**
(45) Veröffentlichungstag und Bekanntmachung des Hinweises auf die Entscheidung über den Einspruch: **22.01.2020**
(45) Hinweis auf die Patenterteilung: 12.09.2012
(21) Anmeldenummer: 06020135.7
(22) Anmeldetag: 26.09.2006
(51) Int. Cl.: G01B 11/04, G01B 11/25, B07C 3/14

(54) **Verfahren zur automatischen Parametrierung von Messsystemen**
Automatic parameterisation of a measuring system
Paramétrage automatique d'un système de mesure

(30) Priorität: 16.11.2005 DE 102005054658
(43) Veröffentlichungstag der Anmeldung: 23.05.2007
(73) Patentinhaber: SICK AG, 79183 Waldkirch (DE)
(72) Erfinder: Kaltenbach, Thomas, 79261 Gutach-Sieglau (DE)
(74) Vertreter: Manitz Finsterwald Patent- und Rechtsanwaltspartnerschaft mbB

(56) Entgegenhaltungen:
- WO-A-91/08439
- DE-A1- 4 340 756
- DE-A1- 4 411 448
- DE-A1- 10 260 201
- US-A- 4 188 544
- US-A- 4 979 815
- US-A- 5 978 521
- US-A1- 2004 036 891
- US-B1- 6 795 200
- Stocher W; Biegelbauer G: "Automated Simultaneous Calibration of a Multi-View Laser Stripe Profiler", Robotics and Automation, 2005. Proceedings of the 2005 IEEE International Conference on Barcelona, Spain 18-22 April 2005, 18 April 2005 (2005-04-18), pages 4424-4429, XP010875421,
- GIELSDORF, F. et al: "A concept for the Calibration of Terrestrial Laser Scanners", FIG Working Week, 2004,
- PAGE, D. ET AL: "Laser based image for reverse engineering", Sensor Review, vol. 23, no. 3, 2003, pages 223-229,

## Beschreibung

Die vorliegende Erfindung betrifft ein Verfahren zur automatischen Parametrierung von Meßsystemen zur Vermessung von mittels einer Transporteinrichtung transportierten Objekten, insbesondere Volumenmeßsystemen.

Zur exakten Vermessung der angesprochenen Objekte ist ein genau und korrekt eingerichtetes Meßsystem nötig. Bei bislang bekannten Verfahren sind zur Parametrierung bzw. Kalibrierung der Meßsysteme mehrere, teils zeitaufwändige Einzelschritte erforderlich, die insbesondere deshalb zudem fehleranfällig sind.

US 4,979,815 beschreibt ein Messsystem bzw. -verfahren, welches das "Cross-Ratio"-Prinzip verwendet. Zu vermessende Objekte werden in einer Laserebene eines Lasers positioniert, so dass auf dem jeweiligen Objekt ein Laserstreifen, welcher der Schnittlinie der Laserebene mit dem Objekt entspricht, entsteht. Dieser Laserstreifen wird dann von einer Kamera aufgenommen. Da der Betrachtungswinkel der Kamera gegenüber der Laserebene geneigt ist, hängt die Position des Laserstreifens in der Bildebene der Kamera von der Höhe des jeweiligen Objekts ab. Zur Kalibrierung des Messsystems wird ein Testobjekt verwendet.

US 4,188,544 beschreibt ein Verfahren bzw. ein System zum Scannen und Bearbeiten eines Werkstücks. Hierzu wird mittels einer Laserquelle eine Laserebene aufgespannt, welche auf das Werkstück gerichtet ist, und mittels einer Kamera die Schnittlinie der Laserebene mit dem Werkstück aufgenommen. Der Betrachtungswinkel der Kamera ist gegenüber der Laserebene geneigt, so dass die Position des Laserstreifens in der Bildebene der Kamera von der Höhe des jeweiligen Objekts abhängt. Zur Kalibrierung des Systems sind Testobjekte vorgesehen, deren Abmessungen exakt bekannt sind.

US 6,795,200 B1 betrifft ein Verfahren und eine Vorrichtung zur Vermessung der Abmessung, insbesondere der Höhe, von quaderförmigen Objekten, die auf einem Transportband transportiert werden. Die Höhe wird mittels eines Projektors und zweier Kameras durch Triangulation ermittelt. Die Vorrichtung wird mittels der Oberfläche des Transportbandes kalibriert.

Der vorliegenden Erfindung liegt die Aufgabe zugrunde, ein Verfahren zu schaffen, das eine schnelle und einfache Inbetriebnahme von Meßsystemen der eingangs genannten Art ermöglicht.

Die Lösung dieser Aufgabe erfolgt durch die Merkmale des Anspruchs 1.

Die Erfindung zeichnet sich dadurch aus, dass mittels eines Laserscanners von einem Testobjekt, dessen Abmessungen zumindest zum Teil bekannt sind und das sich im Messbereich des Meßsystems befindet, zumindest ein Bild erfasst wird. Erfindungsgemäß wird das Testobjekt auf einer Transportfläche der Transporteinrichtung positioniert. Zur Durchführung des erfindungsgemäßen Verfahrens kann das Testobjekt statisch im Messbereich des Meßsystems positioniert sein oder dynamisch durch den Messbereich des Meßsystems hindurchbewegt werden. Aus dem erfassten Bild und den bekannten Abmessungen des Testobjekts können dann die Systemparameter berechnet werden, die notwendig sind, um anschließend zu vermessende Objekte, die nicht Testobjekte sind, korrekt zu vermessen.

Mit dem erfindungsgemäßen Verfahren können die zur Vermessung notwendigen Systemparameter somit automatisch bestimmt bzw. das Meßsystem automatisch eingerichtet werden.

Bei dem Laserscanner kann es sich um einen insbesondere in einer Abtastebene abtastenden Laserscanner handeln. Beispielsweise tastet der Laserscanner in grundsätzlich bekannter Weise seinen Messbereich punktweise mit mindestens einem gepulsten Strahlenbündel ab, das einen vorgegebenen Winkelbereich überstreicht und insbesondere von Punkten bzw. Bereichen des jeweiligen Objekts, insbesondere Testobjekts, reflektiert und ggf. anschließend durch den Laserscanner detektiert wird. Zur Abstands- bzw. Entfernungsmessung kann die Laufzeit der ausgesandten und reflektierten Strahlungspulse oder die Phasenverschiebung zwischen den ausgesandten und reflektierten Strahlungspulsen verwendet werden. Die so erfassten Daten für einen Scan- bzw. Bildpunkt können dann als Koordinaten den Winkel, bei dem der Reflex erfasst wurde, und die Entfernung des Objektpunktes enthalten. Zur weiteren Verarbeitung können derartige Polarkoordinaten beispielsweise in kartesische Koordinaten umgerechnet werden. Insbesondere ergeben die durch den Laserscanner mit einem Scan erfassten Bildpunkte ein eindimensionales Bild im Sinne dieser Anmeldung, das zusätzlich eine Tiefenauflösung besitzt.

Die durch einen Laserscanner aufgenommenen Bildpunkte können Daten über optische Eigenschaften der Objektpunkte enthalten, beispielsweise deren Reflektivität, die eine Erkennung eines charakteristischen Bereichs des Objekts, insbesondere Testobjekts, beispielsweise einer ebenen Fläche, insbesondere Oberseite oder Längsseite, ermöglichen, so dass bei bekannten Abmessungen des Testobjekts die zur Vermessung der Objekte notwendigen Systemparameter ermittelt werden können.

Bei dem erfindungsgemäßen Verfahren können auch mehrere Laserscanner zum Einsatz kommen, um das Objekt, insbesondere Testobjekt, von mehreren verschiedenen Seiten zu erfassen.

Bevorzugt wird ein quaderförmiges oder sonstiges, eine einfache Geometrie besitzendes Testobjekt verwendet.

Vorzugsweise ist zumindest eine Länge, Breite, Höhe und/oder eine Achsrichtung oder Symmetrieachse und/oder die geometrische Form des Testobjekts bekannt.

Bei dem erfindungsgemäßen Verfahren wird bevorzugt genau ein Testobjekt verwendet.

Vorteilhafte Ausführungsformen der Erfindung sind auch in den Unteransprüchen, der Beschreibung und der Zeichnung angegeben.

Besonders vorteilhaft ist es, wenn das Bild von der Transporteinrichtung mit Testobjekt erfasst wird, von dem Laserscanner zusätzlich ein Bild von der Transporteinrichtung ohne Testobjekt erfasst wird und das Bild mit Testobjekt mit dem Bild ohne Testobjekt verglichen wird. Durch Vergleich der Bilder kann unterschieden werden, welche Bildpunkte dem Testobjekt und welche Bildpunkte der Transporteinrichtung oder sonstigen Hintergrundstrukturen zuzurechnen sind, d.h. es können dem Testobjekt zugehörige Bildpunkte extrahiert werden. Hierdurch kann verhindert werden, dass fälschlicherweise andere als dem Testobjekt zugehörige Bildpunkte zur Berechnung der Systemparameter herangezogen werden.

Nach einer bevorzugten Ausführungsform der Erfindung werden die Systemparameter aus der Steigung einer durch Bildpunkte des Bilds gebildeten Gerade ermittelt. Die Gerade kann beispielsweise durch ausgewählte Bildpunkte des Bilds, die einem charakteristischen Bereich des Testobjekts entsprechen, gelegt werden. Dies ist insbesondere dann von Vorteil, wenn der charakteristische Bereich einer ebenen Fläche, insbesondere Oberseite oder Längsseite, entspricht, die parallel oder senkrecht oder unter einem bekannten Winkel zu einer Transportfläche der Transporteinrichtung verläuft. Anhand der durch Bildpunkte des Bilds gebildeten Gerade und einer Mittenachse des Laserscanners können insbesondere durch einfache, an sich bekannte geometrische Betrachtungen die Systemparameter des Meßsystems ermittelt werden.

Die Systemparameter können den Drehwinkel, d.h. die seitliche Verkippung, und/oder den Vertikalabstand des Laserscanners zu der Transporteinrichtung oder einem Teil hiervon, insbesondere einer Transportfläche, umfassen.

Es ist weiterhin bevorzugt, dass das Testobjekt in einer dem Meßsystem zumindest teilweise bekannten Position relativ zu der Transporteinrichtung positioniert wird und die Position des Laserscanners relativ zu der Transporteinrichtung oder einem Teil hiervon, insbesondere einer Transportfläche, ermittelt wird. Hiermit kann die absolute Position des Laserscanners relativ zu der Transporteinrichtung festgestellt werden. Beispielsweise kann das Testobjekt an einer Begrenzung der Transporteinrichtung, insbesondere an einer Begrenzung einer Transportfläche der Transporteinrichtung, angelegt werden.

Des Weiteren wird erfindungsgemäß vorgeschlagen, dass das Testobjekt mit einer konstanten Geschwindigkeit durch den Messbereich des Meßsystems bewegt wird und insbesondere mit einer konstanten Frequenz mehrere Bilder von dem bewegten Testobjekt nacheinander erfasst werden.

Insbesondere kann aus den nacheinander erfassten Bildern die tatsächliche Transportgeschwindigkeit der Transporteinrichtung ermittelt werden. Insbesondere kann die Genauigkeit einer geschätzten oder bereits bekannten, fehlerbehafteten oder zu ungenauen Transportgeschwindigkeit verbessert werden. Beispielsweise kann bei hinreichend hoher Scanfrequenz eines Laserscanners aus den Bildern nahezu exakt festgestellt werden, wie lange es dauert, bis das Testobjekt die durch den Laserscanner aufgespannte Abtastebene vollständig passiert. Aus der festgestellten Zeit und den zumindest teilweise bekannten Abmessungen kann dann die Transportgeschwindigkeit berechnet werden.

Zusätzlich oder alternativ wird zur Ermittlung der tatsächlichen Transportgeschwindigkeit eine aus den mit bestimmten Zeitabständen nacheinander erfassten Bildern und einer geschätzten oder anderweitig bestimmten Transportgeschwindigkeit gewonnene Kontur und/oder ein zwischen zwei mit Bildpunkten belegten Kanten des Testobjekts eingeschlossener Winkel des Testobjekts mit der entsprechenden bekannten tatsächlichen Kontur und/oder dem eingeschlossenen Winkel des Testobjekts verglichen. Um aus nacheinander erfassten, jeweils eindimensionalen Bildern eine Kontur und/oder einen Winkel des Testobjekts zu gewinnen, können die mit bestimmten Zeitabständen voneinander aufgenommenen Bilder mittels einer geschätzten oder anderweitig bestimmten Transportgeschwindigkeit im Ortsraum dargestellt werden. Weicht die geschätzte oder anderweitig bestimmte Transportgeschwindigkeit von der tatsächlichen Transportgeschwindigkeit ab, stellt sich die aus den nacheinander erfassten Bildern gewonnene Kontur und/oder der Winkel gegenüber der tatsächlichen Kontur und/oder dem Winkel verzerrt dar. Aus der Verzerrung kann dann auf die tatsächliche Transportgeschwindigkeit rückgerechnet werden.

Des Weiteren wird erfindungsgemäß vorgeschlagen, dass mehrere Laserscanner verwendet werden, von jedem Laserscanner mehrere Bilder von dem bewegten Testobjekt nacheinander erfasst werden und für jeden Laserscanner aus den nacheinander erfassten Bildern eine Kontur des Testobjekts gewonnen wird, die Konturen der Laserscanner kombiniert werden und aus der Kombination der Konturen der Laserscanner die Position oder Positionen der Laserscanner relativ zueinander ermittelt werden. Ferner kann erfindungsgemäß eine Grenze des Messbereichs des Meßsystems durch Positionieren des Testobjekts an der entsprechenden Grenze insbesondere automatisiert festgelegt werden.

Die Erfindung wird nachfolgend beispielhaft unter Bezugnahme auf die Zeichnung erläutert. Es zeigen:
- Fig. 1: ein Testobjekt auf einer Transporteinrichtung,
- Fig. 2: von einem Laserscanner erfasste Bilder einer Transporteinrichtung mit und ohne Testobjekt,
- Fig. 3: die Anordnung von Fig. 1 mit einem Laserscanner und von dem Laserscanner erfasste tiefenaufgelöste eindimensionale Bilder,
- Fig. 4: die Anordnung von Fig. 1 und eine aus nacheinander erfassten Bildern gewonnene verzerrte Kontur des Testobjekts und die dazugehörige korrigierte Kontur, und
- Fig. 5: die Anordnung von Fig. 1 mit zwei Laserscannern und die von den Laserscannern jeweils erfassten tiefenaufgelösten eindimensionalen Bilder.

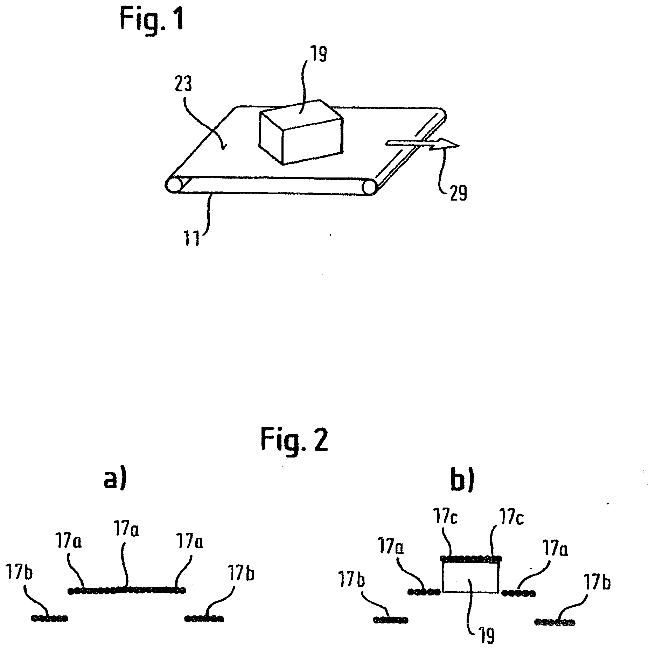

In Fig. 1 ist eine Transporteinrichtung 11, insbesondere ein Transportband, dargestellt. Auf der Transportfläche 23 der Transporteinrichtung 11, d.h. auf der Oberseite des Transportbandes, liegt ein quaderförmiges Testobjekt 19 auf, dessen Abmessungen, d.h. Länge, Höhe und Breite bekannt sind und das mittels der Transporteinrichtung 11 entlang einer Transportrichtung 29 transportiert wird. Die Längsachse des Testobjekts 19 kann dabei gegenüber der Transportrichtung 29 verdreht ausgerichtet sein, wie in Fig. 1 gezeigt ist. Weiterhin ist ein in Fig. 1 nicht dargestellter, in einer Abtastebene abtastender Laserscanner vorgesehen, der pro Scan ein eindimensionales, tiefenaufgelöstes Bild von dem Testobjekt 19 und/oder der Transporteinrichtung 11 erfasst.

In Fig. 2a ist ein mehrere Bildpunkte 17 umfassendes, eindimensionales, tiefenaufgelöstes Bild der Transporteinrichtung ohne Testobjekt gezeigt, das von einem auch in Fig. 2 nicht dargestellten Laserscanner aufgenommen wurde, der lediglich beispielhaft und in etwa senkrecht über der Transporteinrichtung 11 angebracht ist. Die mit 17a bezeichneten Bildpunkte entsprechen Punkten bzw. Bereichen auf der Transportfläche der Transporteinrichtung. Die mit 17b bezeichneten Bildpunkte entsprechen Punkten bzw. Bereichen, die neben der Transportfläche liegen.

Fig. 2b zeigt einen späteren Zeitpunkt, zu dem sich im Messbereich des Laserscanners auf der Transportfläche ein Testobjekt 19 befindet. Die mit 17a und 17b bezeichneten Bildpunkte entsprechen zu Fig. 2a analogen Punkten bzw. Bereichen. Die mit 17c bezeichneten Bildpunkte entsprechen Punkten bzw. Bereichen auf der Oberseite des Testobjekts 19. Durch Vergleich des Bildes gemäß Fig. 2b mit dem Bild gemäß Fig. 2a können vom Laserscanner erfasste Hintergrundstrukturen eliminiert werden, so dass letztlich die das Testobjekt 19 begrenzenden Bildpunkte extrahiert und anschließend ausgewertet werden können.

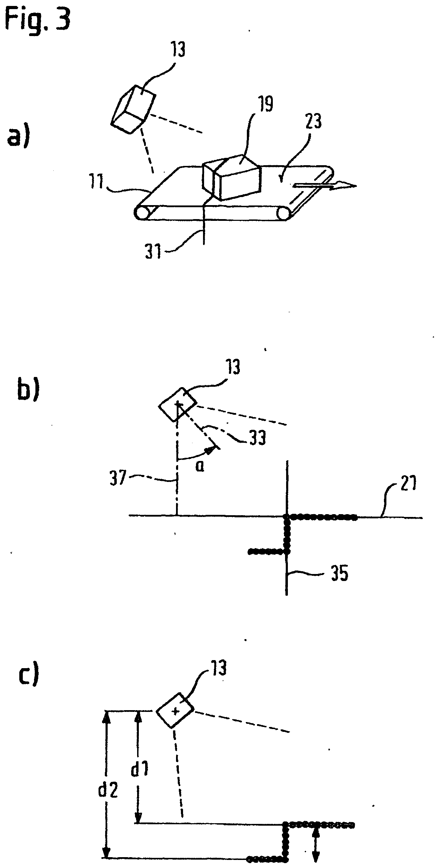

Bei dem Meßsystem gemäß Fig. 3 steht der Laserscanner 13 nicht senkrecht über der Transportfläche 23, sondern ist seitlich zu dieser verkippt. Fig. 3a zeigt die entsprechende Abtastlinie 31, die von dem Laserscanner 13 während eines Scans abgetastet wird. Bildpunkte, die der parallel zu der Transportfläche 23 der Transporteinrichtung 11 verlaufenden Oberseite des Testobjekts 19 entsprechen, bilden eine Gerade 21, wobei eine Senkrechte 37 zu der Geraden 21 unter einem Drehwinkel a gegenüber einer Mittenachse 33 des Laserscanners 13 geneigt ist (Fig. 3b). Entsprechend bilden Bildpunkte, die einer parallel zu der Vertikalen auf der Transportfläche 23 verlaufenden Längsseite des Testobjekts 19 entsprechen, eine Gerade 35, die parallel zu der Senkrechten 37 verläuft und folglich ebenfalls unter dem Drehwinkel a gegenüber der Mittenachse 33 geneigt ist. Der aus dem Bild gemäß Fig. 3b ablesbare Drehwinkel a definiert die seitliche Verkippung des Laserscanners 13 gegenüber der Transportfläche 23.

Neben dem Drehwinkel a kann mittels einfacher geometrischer und hier deshalb nicht näher erläuterten Überlegungen aus dem Bild gemäß Fig. 3b der Vertikalabstand d1 des Laserscanners 13 zu der Oberseite des Testobjekts bzw. der Vertikalabstand d2 des Laserscanners 13 zu der Transportfläche bestimmt werden (Fig. 3c). Der Drehwinkel a und der Vertikalabstand d2 stellen Systemparameter dar, die eine automatische Parametrierung des Meßsystems und somit eine Vermessung, insbesondere Volumenbestimmung, nachfolgender mittels der Transporteinrichtung 11 transportierter Objekte, deren Abmessungen nicht bekannt sind, erlauben.

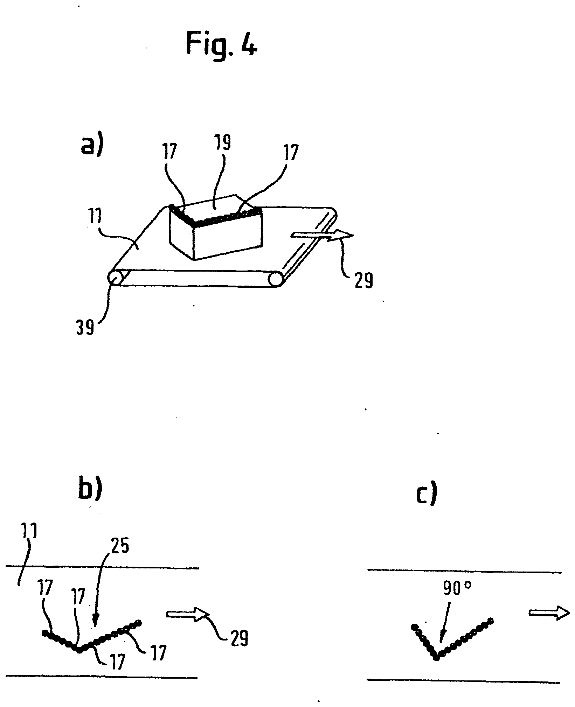

Das Testobjekt 19 wird gemäß Fig. 4a mit einer konstanten Geschwindigkeit v entlang der Transportrichtung 29 durch den Messbereich des Meßsystems, d.h. die Abtastebene des Laserscanners 13 bewegt, wobei in einer Umlenkwelle 39 der Transporteinrichtung 11 ein nicht dargestellter Inkrementalgeber, insbesondere Drehimpulsgeber angebracht ist, mittels dem eine Transportgeschwindigkeit v' bestimmbar ist, die in etwa, üblicherweise jedoch nicht exakt, der tatsächlichen Geschwindigkeit v entspricht.

Darüber hinaus werden mit einer konstanten Scanfrequenz mehrere Bilder von dem Testobjekt 19 nacheinander erfasst, wobei die Bilder aufgrund der Bewegung des Testobjekts 19 von verschiedenen, in Transportrichtung 29 äquidistanten Abschnitten des Testobjekts 19 erfasst werden.

Aus der Scanfrequenz und der mit Hilfe des Inkrementalgebers ermittelten Transportgeschwindigkeit v' kann aus den Bildern eine zweidimensionale Abbildung des Testobjekts 19 erstellt werden. In Fig. 4b ist eine derartig berechnete Abbildung in einer Draufsicht gezeigt, wobei jedoch lediglich die Bildpunkte 17 dargestellt sind, die einer der beiden in Fig. 4a mit Bildpunkten 17 belegten Kanten des quaderförmigen Testobjekts 19 entsprechen. Die in Fig. 4b dargestellten Bildpunkte 17 repräsentieren folglich eine Kontur 25 des Testobjekts 19.

Da die für die Berechnung der Abbildung gemäß Fig. 4b verwendete Geschwindigkeit v' jedoch nicht exakt der tatsächlichen Geschwindigkeit v entspricht, ist die Kontur 25 der Abbildung gemäß Fig. 4b gegenüber der entsprechenden tatsächlichen Kontur des Testobjekts 19 verzerrt. Es ist aufgrund der Quaderform des Testobjekts 19 nämlich bekannt, dass der tatsächliche Winkel zwischen den beiden in Fig. 4a mit Bildpunkten 17 belegten Kanten in der Draufsicht einen Winkel von 90° einschließen sollten. Bei der Erstellung der zweidimensionalen Abbildung des Testobjekts 19 wird deshalb eine Transportgeschwindigkeit gewählt oder berechnet, die zu einer Abbildung gemäß Fig. 4c führt, in der die aus den nacheinander erfassten Bildern gewonnenen Kanten des Testobjekts 19 einen Winkel von 90° einschließen. Die derart gewählte oder berechnete Geschwindigkeit entspricht dann der tatsächlichen Transportgeschwindigkeit v.

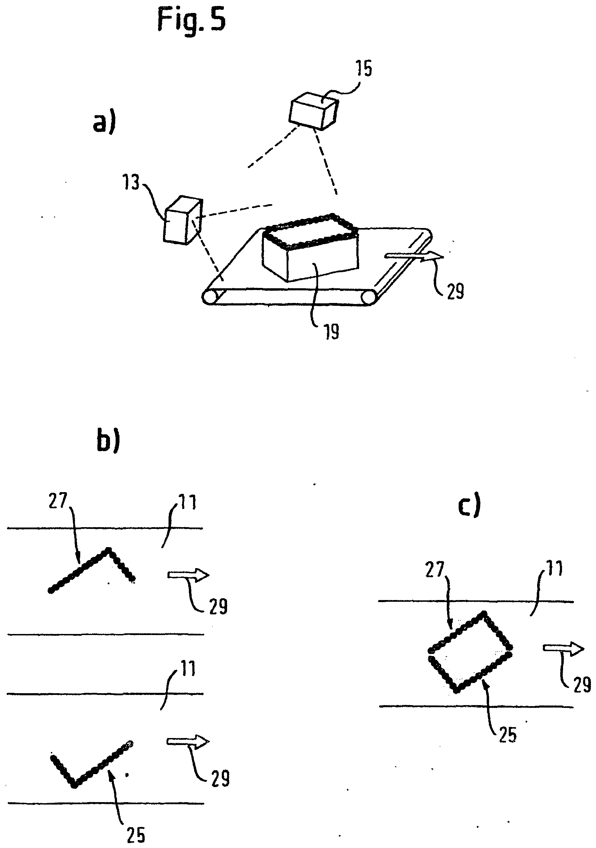

Ein Meßsystem mit mehreren, insbesondere zwei Laserscannern 13, 15 ist in Fig. 5a gezeigt. Bei einem solchen Meßsystem kann von jedem Sensor 13, 15 eine wie vorstehend erläuterte, aus nacheinander erfassten Bildern gewonnene, gemäß Fig. 4b verzerrte oder gemäß Fig. 4c korrekte Kontur ermittelt werden. In Fig. 5b sind derartige Konturen 25, 27 dargestellt, wobei die obere Kontur von dem Laserscanner 15 und die untere Kontur von dem Laserscanner 13 ermittelt wurde. Werden die beiden Konturen 25, 27 wie in Fig. 5b gezeigt kombiniert, um die vier Kanten der Oberseite des Testobjekts 19 geschlossen abzubilden, kann daraus die Position der Sensoren 13, 15 relativ zueinander ermittelt werden. Insbesondere kann hierfür erforderlich sein, dass der zeitliche Bezug der Scans der Einzelscanner 13, 15 zueinander bekannt ist.

Bei dem vorstehend erläuterten erfindungsgemäßen Verfahren können Bilder kontinuierlich aufgezeichnet werden, insbesondere bevor das Testobjekt 19 in den Messbereich des Laserscanners 13, 15 eintritt, während das Testobjekt 19 den Messbereich durchfährt und nachdem das Testobjekt 19 den Messbereich verlassen hat.

### Bezugszeichenliste

- 11: Transporteinrichtung
- 13: Sensor
- 15: Sensor
- 17: Bildpunkt
- 19: Testobjekt
- 21: Gerade
- 23: Transportfläche
- 25: Kontur
- 27: Kontur
- 29: Transportrichtung
- 31: Abtastlinie
- 33: Mittenachse
- 35: Gerade
- 37: Senkrechte
- 39: Umlenkwelle

- a: Drehwinkel
- d1: Vertikalabstand
- d2: Vertikalabstand

## Patentansprüche

1. Verfahren zur automatischen Parametrierung von Meßsystemen zur Vermessung von mittels einer Transporteinrichtung (11) transportierten Objekten, insbesondere Volumenmeßsystemen,
**dadurch gekennzeichnet, dass**
von wenigstens einem einen Teil eines zu parametrierenden Meßsystems bildenden Laserscanner (13, 15) wenigstens ein zumindest eindimensionales, Bildpunkte (17) umfassendes Bild von einem hinsichtlich seiner Abmessungen dem Meßsystem bekannten, im Messbereich des Meßsystems auf der Transporteinrichtung (11) befindlichen Testobjekt (19), welches eine ebene Fläche aufweist, erfasst wird, und
aus dem Bild und den bekannten Abmessungen des Testobjekts (19) die zur Vermessung der Objekte notwendigen Systemparameter ermittelt werden.

2. Verfahren nach Anspruch 1,
**dadurch gekennzeichnet,**
**dass** das Bild von der Transporteinrichtung (11) mit Testobjekt (19) erfasst wird,
**dass** von dem Laserscanner (13, 15) zusätzlich ein Bild von der Transporteinrichtung (11) ohne Testobjekt erfasst wird, und
**dass** das Bild mit Testobjekt (19) mit dem Bild ohne Testobjekt verglichen wird.

3. Verfahren nach Anspruch 1 oder 2,
**dadurch gekennzeichnet,**
**dass** die Systemparameter aus der Steigung einer durch Bildpunkte (17) des Bilds gebildeten Gerade (21, 35) ermittelt werden.

4. Verfahren nach einem der vorhergehenden Ansprüche,
**dadurch gekennzeichnet,**
**dass** die Systemparameter den Drehwinkel, d.h. die seitliche Verkippung, und/oder den Vertikalabstand des Laserscanners (13, 15) zu der Transporteinrichtung (11) oder einem Teil hiervon, insbesondere einer Transportfläche (23), umfassen.

5. Verfahren nach einem der vorhergehenden Ansprüche,
**dadurch gekennzeichnet,**
**dass** das Testobjekt (19) in einer dem Meßsystem zumindest teilweise bekannten Position relativ zu der Transporteinrichtung (11) positioniert wird, und
**dass** die Position des Laserscanners (13, 15) relativ zu der Transporteinrichtung (11) oder einem Teil hiervon, insbesondere einer Transportfläche (23), ermittelt wird.

6. Verfahren nach einem der vorhergehenden Ansprüche,
**dadurch gekennzeichnet,**
**dass** das Testobjekt (19) mit einer konstanten Geschwindigkeit durch den Messbereich des Meßsystems bewegt wird, und dass insbesondere mit einer konstanten Frequenz mehrere Bilder von dem bewegten Testobjekt (19) nacheinander erfasst werden.

7. Verfahren nach Anspruch 6,
**dadurch gekennzeichnet,**
**dass** aus den nacheinander erfassten Bildern die tatsächliche Transportgeschwindigkeit der Transporteinrichtung (11) ermittelt wird.

8. Verfahren nach Anspruch 7,
**dadurch gekennzeichnet,**
**dass** zur Ermittlung der tatsächlichen Transportgeschwindigkeit eine aus den mit bestimmten Zeitabständen nacheinander erfassten Bildern und einer geschätzten oder anderweitig bestimmten Transportgeschwindigkeit gewonnene Kontur (25, 27) und/oder ein zwischen zwei mit Bildpunkten belegten Kanten des Testobjekts (19) eingeschlossener Winkel des Testobjekts (19) mit der entsprechenden bekannten tatsächlichen Kontur und/oder dem eingeschlossenen Winkel des Testobjekts (19) verglichen wird.

9. Verfahren nach einem der Ansprüche 6 bis 8,
**dadurch gekennzeichnet,**
**dass** mehrere Laserscanner (13, 15) verwendet werden,
**dass** von jedem Laserscanner (13, 15) mehrere Bilder von dem bewegten Testobjekt (19) nacheinander erfasst werden und für jeden Laserscanner (13, 15) aus den nacheinander erfassten Bildern eine Kontur (25, 27) des Testobjekts (19) gewonnen wird,
**dass** die Konturen (25, 27) der Laserscanner (13, 15) kombiniert werden, und
**dass** aus der Kombination der Konturen (25, 27) der Laserscanner (13, 15) die Position oder Positionen der Laserscanner (13, 15) relativ zueinander ermittelt werden.

10. Verfahren nach einem der vorhergehenden Ansprüche,
**dadurch gekennzeichnet,**
**dass** eine Grenze des Messbereichs des Meßsystems durch Positionieren des Testobjekts (19) an der entsprechenden Grenze automatisiert festgelegt wird.

11. Verfahren nach einem der vorhergehenden Ansprüche,
**dadurch gekennzeichnet,**
**dass** genau ein Testobjekt (19) verwendet wird.

## Claims

1. A method for the automatic parameterization of measuring systems for the measurement of objects transported by means of a transport device (11), in particular volume measurement systems,
**characterized in that**
at least one image, which is at least one-dimensional and comprises picture elements (17), of a test object (19) which is known to the measuring system with respect to its dimensions, which is located on the transport device (11) in the measuring zone of the measuring system and which has a planar surface is detected by at least one laser scanner (13, 15) which forms a part of a measuring system to be parameterized; and
**in that** the system parameters required for the measurement of the objects are determined from the image and from the known dimensions of the test object (19).

2. A method in accordance with claim 1,
**characterized in that**
the image of the transport device (11) with the test object (19) is detected;
**in that** an image of the transport device (11) without a test object is additionally detected by the laser scanner (13, 15); and
**in that** the image with the test object (19) is compared with the image without a test object.

3. A method in accordance with claim 1 or claim 2,
**characterized in that**
the system parameters are determined from the gradient of a straight line (21, 35) formed by picture elements (17) of the image.

4. A method in accordance with any one of the preceding claims,
**characterized in that**
the system parameters include the angle of rotation, i.e. the lateral tilt, and/or the vertical spacing of the laser scanner (13, 15) from the transport device (11) or from a part thereof, in particular from a transport surface (23).

5. A method in accordance with any one of the preceding claims,
**characterized in that**
the test object (19) is positioned in a position relative to the transport device (11) known to the measuring system at least in part; and
**in that** the position of the laser scanner (13, 15) is determined relative to the transport device (11) or to a part thereof, in particular to a transport surface (23).

6. A method in accordance with any one of the preceding claims,
**characterized in that**
the test object (19) is moved through the measuring zone of the measuring system at a constant speed; and
**in that** a plurality of images of the moved test object (19) are sequentially detected, in particular at a constant frequency.

7. A method in accordance with claim 6,
**characterized in that**
the actual transport speed of the transport device (11) is determined from the sequentially detected images.

8. A method in accordance with claim 7,
**characterized in that**
a contour (25, 27) gained from the images detected sequentially at specific time intervals and from an estimated or otherwise determined transport speed and/or an angle of the test object (19) included between two edges of the test object (19) covered by picture elements is/are compared with the corresponding known actual contour and/or with the included angle of the test object (19) for the determination of the actual transport speed.

9. A method in accordance with any one of the claims 6 to 8,
**characterized in that**
a plurality of laser scanners (13, 15) are used;
**in that** a plurality of images of the moved test object (19) are sequentially detected by each laser scanner (13, 15) and a contour (25, 27) of the test object (19) is gained from the sequentially detected images for each laser scanner (13, 15);
**in that** the contours (25, 27) of the laser scanners (13, 15) are combined; and
**in that** the position or positions of the laser scanners (13, 15) relative to one another are determined from the combination of the contours (25, 27) of the laser scanners (13, 15).

10. A method in accordance with any one of the preceding claims,
**characterized in that**
a border of the measuring zone of the measuring system is fixed in an automated manner by positioning the test object (19) at the corresponding border.

11. A method in accordance with any one of the preceding claims,
**characterized in that**
precisely one test object (19) is used.

## Revendications

1. Procédé pour le paramétrage automatique de systèmes de mesure pour la mesure d'objets transportés au moyen d'un dispositif de transport (11), en particulier système de mesure volumétrique,
**caractérisé en ce que**
avec au moins un scanneur à laser (13, 15) formant une partie d'un système de mesure à paramétrer, on prend au moins une image, au moins monodimensionnelle, comprenant des pixels (17) d'un objet test (19), connu du système de mesure pour ce qui concerne ses dimensions, qui se trouve dans la plage de mesure du dispositif de mesure sur le dispositif de transport (11) et qui présente une surface plane, et
on détermine les paramètres du système nécessaires pour la mesure des objets à partir de l'image et à partir des dimensions connues de l'objet test (19).

2. Procédé selon la revendication 1,
**caractérisé en ce que** l'on prend l'image du dispositif de transport (11) avec l'objet test (19),
**en ce que** l'on prend avec le scanneur à laser (13, 15) additionnellement une image du dispositif de transport (11) sans objet test, et **en ce que** l'image avec objet test (19) est comparée avec l'image sans objet test.

3. Procédé selon la revendication 1 ou 2,
**caractérisé en ce que** les paramètres du système sont déterminés à partir de la pente d'une droite (21, 35) formée par des pixels (17) de l'image.

4. Procédé selon l'une des revendications précédentes,
**caractérisé en ce que** les paramètres du système incluent l'angle de rotation, c'est-à-dire le basculement latéral, et/ou la distance verticale du scanneur à laser (13, 15) par rapport au dispositif de transport (11) ou à une partie de celui-ci, en particulier une surface de transport (23).

5. Procédé selon l'une des revendications précédentes,
**caractérisé en ce que** l'objet test (19) est positionné par rapport au dispositif de transport (11) dans une position au moins partiellement connue du système de mesure, et
**en ce que** la position du scanneur à laser (13, 15) est déterminée par rapport au dispositif de transport (11) ou à une partie de celui-ci, en particulier une surface de transport (23).

6. Procédé selon l'une des revendications précédentes,
**caractérisé en ce que** l'objet test (19) est déplacé avec une vitesse constante à travers la plage de mesure du système de mesure, et
**en ce que** l'on prend en particulier plusieurs images de l'objet test déplacé (19) les unes après les autres avec une fréquence constante.

7. Procédé selon la revendication 6,
**caractérisé en ce que** l'on détermine à partir des images prises les unes après les autres la vitesse de transport effective du dispositif de transport (11).

8. Procédé selon la revendication 7,
**caractérisé en ce que**, pour la détermination de la vitesse de transport effective, on compare un contour (25, 27) récupéré à partir des images prises les unes après les autres avec des écarts temporels déterminés et à partir d'une vitesse de transport estimée ou déterminée d'une autre manière, et/ou on compare un angle de l'objet test (19) défini entre deux arêtes de l'objet test (19) occupé avec des pixels, avec le contour effectif connu correspondant et/ou avec l'angle défini de l'objet test (19).

9. Procédé selon l'une des revendications 6 à 8,
**caractérisé en ce que**
on utilise plusieurs scanneurs à laser (13, 15),
on prend avec chaque scanneur à laser (13, 15) plusieurs images de l'objet test déplacé (19) les unes après les autres et, pour chaque scanneur à laser (13, 15) on récupère à partir des images prises les unes après les autres un contour (25, 27) de l'objet test (19),
**en ce que** l'on combine les contours (25, 27) des scanneurs à laser (13, 15), et
**en ce que** l'on détermine la position ou les positions des scanneurs à laser (13, 15) les uns par rapport aux autres à partir de la combinaison des contours (25, 27) des scanneurs à laser (13, 15).

10. Procédé selon l'une des revendications précédentes,
**caractérisé en ce que** l'on fixe de manière automatisée une limite de la plage de mesure du système de mesure par positionnement de l'objet test (19) à la limite correspondante.

11. Procédé selon l'une des revendications précédentes,
**caractérisé en ce que** l'on utilise exactement un objet test (19).
